# EUROPEAN PATENT APPLICATION

(11) **EP 4 818 263 A2**
(43) Date of publication of application: **07.10.2026**
(21) Application number: 26170181.7
(22) Date of filing: 01.04.2026
(51) Int. Cl.: C08L 95/00

(54) **COMPOSITIONS AND METHODS FOR REDUCTION OF ODORS IN PETROLEUM-BASED PRODUCTS AND BITUMINOUS MATERIALS**

(30) Priority: 02.04.2025 US 202563782438 P
(71) Applicant: OMI Industries, Inc., Palatine, IL 60067 (US)
(72) Inventor: HAUPERT, Laura, Palatine, 60067 (US); CRISLER, Glenn, Palatine, 60067 (US); SLUSHER, Taylor, Palatine, 60067 (US)
(74) Representative: Mewburn Ellis LLP

(57) **Abstract**

Compositions and methods for reducing odors emitted from petroleum-based products and bituminous materials, such as asphalt, are disclosed. In embodiments, compositions include a coffee component, a vanilla component, and a carrier, optionally further including an additive such as a scavenger compound, plant essential oil, glycerin, silicone, or wax. In one embodiment, coffee essential oil and vanilla essential oil are combined in a 3:1 ratio and diluted with a fatty acid alkyl ester carrier, such as soy methyl ester. The compositions provide at least one of a positive change in hedonic tone and a reduction in odor intensity when added to a petroleum-based product or bituminous material. The compositions also reduce emissions of odor-causing agents, including general hydrocarbons, mercaptans, and hydrogen sulfide. Methods of making and using the odor-reducing compositions, including addition to hot mixed asphalt during preparation, are also provided.

## Description

### BACKGROUND OF THE DISCLOSURE

Asphalt is the heaviest fraction of hydrocarbons obtained by fractional distillation of crude oil. The asphaltic fraction consists of high molecular weight hydrocarbons and sulfur containing compounds. Asphalt can also occur naturally in environments such as tar pits. This material, also called "bitumen," exhibits high viscosity and can be used in roadway construction and maintenance. Asphalt used in roadways is often processed with aggregates such as sand, gravel, recycled asphalt products, crushed stone, and various chemical modifiers to improve its mechanical performance and durability.

To make asphalt suitable for storage, transportation, or application, it is heated so that it becomes a pourable liquid. Typical heating temperatures range from 135°C to 180°C during processes such as Hot Mixed Asphalt (HMA) preparation and processes that involve recycled asphalt products (RAP). When heated to these temperatures, asphalt releases odorous compounds (odor causing agents) including but not limited to volatile organic compounds (VOCs), sulfur-containing compounds such as hydrogen sulfide and mercaptans, and polycyclic aromatic hydrocarbons (PAHs). Many of these chemicals have very low odor thresholds (concentrations in the parts per billion (ppb) range). In addition, many of these chemicals pose health concerns such as cancer or respiratory issues, which is an issue for employees exposed to these chemicals. For example, hydrogen sulfide (H₂S) is often produced from heated asphalt and has the noticeable "rotten egg" odor profile. The odor threshold or lowest concentration of a substance that can be detected by the human sense of smell for H₂S has been reported between 0.5 ppb and 0.3 parts per million (ppm) in various testing. Prolonged exposure to hydrogen sulfide at concentrations as low as 2 ppm can cause nausea, tearing of the eyes, headaches or loss of sleep (www.osha.gov/hydrogen-sulfide/hazards).

The concentration of odorous gases released from asphalt is temperature dependent. Higher concentrations of these gases are released at high temperatures, resulting in higher odors. A study in 2019 showed that by increasing the temperature 20°C, from 140°C to 160°C, the total number of detectable PAHs increased by 3-7 times (Shicong et al., Effects of asphalt source and mixing temperature on the generated asphalt fumes, Journal of Hazardous Materials, Jun. 2019, Vol. 371).

The chemical compositions of asphalts are diverse and are influenced by several factors. Crude oil compositions vary based on their source location (e.g., where they were drilled), it follows that the final asphalts derived from these crudes will also vary. Asphalts are also unique based on the temperature at which the heaviest fraction is obtained, as well as sulfur content. For example, it has been demonstrated that concentrations of sulfur-containing compounds are significantly different in asphalt found in the Eastern Region of the U.S. versus the Western Region of the U.S. (Lange et al., Quantification of Potentially Odorous Volatile Organic Compounds from Asphalt Binders Using Head-Space Gas Chromatography, Journal of Testing and Evaluation, Mar. 2005, Vol. 33, No. 2, Paper ID JTE11800). Due to this variation in asphalt composition, there is a need for a variety of odor control tools.

There are many different technologies for odor control in asphalt, which comprise of both removing odors and/or blocking their emission from asphalt. There is a difference between odor control and emissions control. Odor control refers to the reduction or elimination of unpleasant odors as perceived by humans, whereas emission control refers to the reduction or removal of the offending odor molecules pollutants. Emission control can be achieved by reducing the amount of odorous compounds being volatilized from a process or conversion of these compounds into less odorous compounds in the air. While emissions control often results in odor control, the converse isn't always true. It is possible to reduce the offensiveness of gases emitted from a process without seeing any significant change in the concentration of the gases being emitted. For example, the addition of masking agents may change the odor profile of emitted gases without affecting the emissions themselves resulting in a final process smell where both asphalt smells and the masking agent(s) are simultaneously perceived. Alternatively, scavengers are often used in asphalt to react with sulfur-containing compounds, therefore reducing the emissions of those compounds and reducing the overall offensiveness of the asphalt odor. However, commonly used scavengers do not target VOCs or PAHs produced by the heated asphalt, meaning those odors remain.

Therefore, there is a need for new compositions and methods that both improve the odor profiles of odor causing agents emitted from asphalt and that reduce their emission from asphalt. Because other petroleum-based products and bituminous materials have similar challenges with respect to odor profiles and odor causing agent emissions, it would be advantageous to provide new compositions and methods that both improve the odor profiles of odor causing agents emitted from other petroleum-based products and bituminous materials, as well.

### SUMMARY OF THE DISCLOSURE

As shown and described herein, the present disclosure relates to compositions and methods for controlling and/or reducing odors emitted from asphalt, other petroleum-based products and bituminous materials.

In a first aspect, the present disclosure provides a composition including a) about 0.1-30% of a coffee component; about 0-30% of a vanilla component; about 40-99.8% of a carrier; and d) about 0-99.8% of an additive. The composition provides at least one of a positive change in hedonic tone and a negative change in odor intensity of a petroleum-based product or a bituminous material when added thereto.

In one embodiment of the first aspect, the composition includes a) about 0.1-30% of a coffee component; b) about 0.1-30% of a vanilla component; and c) about 40-99.8% of a carrier.

In one embodiment of the first aspect, the composition includes a) about 3.75% of a coffee component; b) about 1.25% of a vanilla component; and c) about 95% of a carrier.

In one embodiment of the first aspect or any embodiments thereof, the coffee component includes whole coffee beans, ground coffee beans, used coffee grounds, brewed coffee, oils, a coffee extract, a synthetic coffee product, coffee-derived volatile organic compounds (VOCs), terpenes, aldehydes, ketones, fatty acids, furaneol, or damascene beta, and combinations thereof.

In one embodiment of the first aspect or any embodiments thereof, the vanilla component includes whole vanilla beans, vanilla seeds, a vanilla extract, a synthetic vanilla product, vanilla-derived phenolic aldehydes, phenols, phenolic ethers, ketones, phenolic acids, aldehydes, or vanillin, and combinations thereof.

In one embodiment of the first aspect or any embodiments thereof, the carrier includes a carrier oil, an anionic emulsifier, a cationic emulsifier, a nonionic emulsifier, a clay, a powder, or an aggregate, and combinations thereof.

In one embodiment, the carrier oil includes mineral oil, a vegetable oil, or a fatty acid alkyl ester, and combinations thereof.

In one embodiment, the vegetable oil includes sweet almond oil, apricot kernel oil, argan oil, coconut oil, olive oil, avocado oil, sunflower oil, grapeseed oil, sesame oil, jojoba oil, hemp seed oil, or safflower oil, and combinations thereof.

In one embodiment, the fatty acid alkyl ester includes a fatty acid methyl ester or a fatty acid ethyl ester, and combinations thereof.

In one embodiment, the fatty acid methyl ester includes a methyl ester of palm oil, soy oil, coconut oil, canola oil, peanut oil, sunflower oil, or safflower oil, and combinations thereof.

In one embodiment, the fatty acid methyl ester is soy methyl ester.

In one embodiment, the fatty acid ethyl ester includes an ethyl ester of palm oil, soy oil, coconut oil, canola oil, peanut oil, sunflower oil, or safflower oil, and combinations thereof.

In one embodiment, the clay includes bentonite, kaolin, or silica, and combinations thereof.

In one embodiment, the powder includes diatomaceous earth or ethylene-vinyl acetate and combinations thereof.

In one embodiment, the aggregate includes crushed stone, sand, gravel, or asphalt millings, and combinations thereof.

In one embodiment of the first aspect or any embodiments thereof, the additive includes a scavenger compound, a plant essential oil, a natural glycerin, a synthetic glycerin, a silicone, or a wax, and combinations thereof.

In one embodiment of the first aspect or any embodiments thereof, the composition reduces emissions of at least one of general hydrocarbons, mercaptans, and hydrogen sulfide from a petroleum-based product or a bituminous material when added thereto.

In one embodiment, the petroleum-based product includes asphalt, roofing tar, a petroleum-based roofing material, an asphalt emulsion sealer, a petroleum-based cleaner, or a petroleum-based solvent, and combinations thereof.

In one embodiment, the petroleum-based product is asphalt.

In one embodiment, the bituminous material includes a coal-tar containing product.

In a second aspect, the present disclosure provides a composition including a) about 3.75% of coffee essential oil; b) about 1.25% of vanilla essential oil; and c) about 95% of soy methyl ester.

In a third aspect, the present disclosure provides a composition including a) about 95% to about 99.99% of a petroleum-based product or a bituminous material; b) about 0.000375% to about 0.19% of coffee essential oil; b) about 0.000125% to about 0.06% of vanilla essential oil; and c) about 0.0095% to about 4.75% of soy methyl ester.

In one embodiment of the third aspect, the composition includes a) about 95% of the petroleum-based product or the bituminous material; b) about 0.19% of coffee essential oil; c) about 0.06% of vanilla essential oil; and d) about 4.75% of soy methyl ester.

In one embodiment of the third aspect, the composition includes a) about 99.99% of the petroleum-based product or the bituminous material; b) about 0.000375% of coffee essential oil; b) about 0.000125% of vanilla essential oil; and c) about 0.0095% of soy methyl ester.

In one embodiment of the third aspect or any embodiments thereof, the petroleum-based product comprises asphalt, roofing tar, a petroleum-based roofing material, an asphalt emulsion sealer, a petroleum-based cleaner, or a petroleum-based solvent, and combinations thereof. In one embodiment, the petroleum-based product is asphalt.

In one embodiment of the third aspect or any embodiments thereof, the bituminous material comprises a coal-tar containing product.

In a fourth aspect, the present disclosure provides a composition including a) a petroleum-based product or a bituminous material; and b) an effective amount of an odor reducing composition. The composition includes i) a coffee component, ii) a vanilla component, and iii) a carrier. The coffee component and the vanilla component are present in a 3 to 1 ratio, and the odor reducing composition provides at least one of a positive change in hedonic tone and a negative change in odor intensity to the petroleum-based product or the bituminous material compared to the petroleum-based product or the bituminous material alone.

In one embodiment of the fourth aspect, the odor reducing composition reduces emissions of at least one of general hydrocarbons, mercaptans, and hydrogen sulfide from the petroleum-based product or the bituminous material.

In a fifth aspect, the present disclosure provides a method including the steps of combining an effective amount of a coffee component, an effective amount of a vanilla component, a carrier, and optionally, an additive, to form an odor reducing composition. The odor reducing composition provides at least one of a positive change in hedonic tone and a negative change in odor intensity of a petroleum-based product or a bituminous material when added thereto.

In a sixth aspect, the present disclosure provides a method including the steps of providing an odor reducing composition comprising i) an effective amount of a coffee component, ii) an effective amount of a vanilla component, iii) a carrier, and iv) optionally, an additive. The odor reducing composition provides at least one of a positive change in hedonic tone and a negative change in odor intensity of a petroleum-based product or a bituminous material when added thereto.

In a seventh aspect, the present disclosure provides a method of reducing odor in a petroleum-based product or a bituminous material. The method includes the steps of a) combining a petroleum-based product or a bituminous material with an effective amount of an odor reducing composition including i) a coffee component, ii) a vanilla component, iii) optionally, a carrier, and iv) optionally, an additive; and b) at least one of increasing hedonic tone and decreasing odor intensity of the petroleum-based product or the bituminous material compared to the petroleum-based product or the bituminous material alone.

In one embodiment of the fifth, sixth, or seventh aspects, the coffee component includes whole coffee beans, ground coffee beans, used coffee grounds, brewed coffee, oils, a coffee extract, a synthetic coffee product, coffee-derived volatile organic compounds (VOCs), terpenes, aldehydes, ketones, fatty acids, furaneol, or damascene beta, and combinations thereof.

In one embodiment of the fifth, sixth, or seventh aspects or any embodiments thereof, the vanilla component includes whole vanilla beans, vanilla seeds, a vanilla extract, a synthetic vanilla product, vanilla-derived phenolic aldehydes, phenols, phenolic ethers, ketones, phenolic acids, aldehydes, or vanillin, and combinations thereof.

In one embodiment of the fifth, sixth, or seventh aspects or any embodiments thereof, the carrier includes a carrier oil, an anionic emulsifier, a cationic emulsifier, a nonionic emulsifier, a clay, a powder, or an aggregate, and combinations thereof.

In one embodiment, the carrier oil includes mineral oil, a vegetable oil, or a fatty acid alkyl ester, and combinations thereof.

In one embodiment, the vegetable oil includes sweet almond oil, apricot kernel oil, argan oil, coconut oil, olive oil, avocado oil, sunflower oil, grapeseed oil, sesame oil, jojoba oil, hemp seed oil, or safflower oil, and combinations thereof.

In one embodiment, the fatty acid alkyl ester includes a fatty acid methyl ester or a fatty acid ethyl ester, and combinations thereof.

In one embodiment, the fatty acid methyl ester includes a methyl ester of palm oil, soy oil, coconut oil, canola oil, peanut oil, sunflower oil, or safflower oil, and combinations thereof.

In one embodiment, the fatty acid methyl ester is soy methyl ester.

In one embodiment, the fatty acid ethyl ester includes an ethyl ester of palm oil, soy oil, coconut oil, canola oil, peanut oil, sunflower oil, or safflower oil, and combinations thereof.

In one embodiment, the clay includes bentonite, kaolin, or silica, and combinations thereof.

In one embodiment, the powder includes diatomaceous earth or ethylene-vinyl acetate and combinations thereof.

In one embodiment, the aggregate includes crushed stone, sand, gravel, or asphalt millings, and combinations thereof.

In one embodiment of the fifth, sixth, or seventh aspects or any embodiments thereof, the additive includes a scavenger compound, a plant essential oil, a natural glycerin, a synthetic glycerin, a silicone, or a wax, and combinations thereof.

In one embodiment of the fifth, sixth, or seventh aspects or any embodiments thereof, the petroleum-based product includes asphalt, roofing tar, a petroleum-based roofing material, an asphalt emulsion sealer, a petroleum-based cleaner, or a petroleum-based solvent, and combinations thereof.

In one embodiment, the petroleum-based product is asphalt.

In one embodiment of the fifth, sixth, or seventh aspects or any embodiments thereof, the bituminous material comprises a coal-tar containing product.

In one embodiment of the fifth or sixth aspects or any embodiments thereof, the odor reducing composition reduces emissions of at least one of general hydrocarbons, mercaptans, and hydrogen sulfide from a petroleum-based product or a bituminous material when added thereto.

In one embodiment of the seventh aspect, the method further includes step c) reducing emissions of at least one of general hydrocarbons, mercaptans, and hydrogen sulfide from the petroleum-based product or the bituminous material.

### DETAILED DESCRIPTION

All publications, including but not limited to patents and patent applications, cited in this specification are herein incorporated by reference as though set forth in their entirety in the present application.

As utilized in accordance with the present disclosure, unless otherwise indicated, all technical and scientific terms shall be understood to have the meaning commonly understood by one of ordinary skill in the art. Unless otherwise required by context, singular terms shall include the plural and plural terms shall include the singular.

Throughout this specification, unless the context specifically indicates otherwise, the terms "comprise" and "include" and variations thereof (e.g., "comprises," "comprising," "includes," and "including") will be understood to indicate the inclusion of a stated component, feature, element, or step or group of components, features, elements or steps but not the exclusion of any other component, feature, element, or step or group of components, features, elements, or steps. Any of the terms "comprising," "consisting essentially of," and "consisting of" may be replaced with either of the other two terms, while retaining their ordinary meanings.

As used herein, the singular forms "a," "an," and "the" include plural referents unless the context clearly indicates otherwise.

In some embodiments, percentages disclosed herein can vary in amount by ±10, 20, or 30% from values disclosed and remain within the scope of the contemplated disclosure.

Unless otherwise indicated or otherwise evident from the context and understanding of one of ordinary skill in the art, values herein that are expressed as ranges can assume any specific value or sub-range within the stated ranges in different embodiments of the disclosure, to the tenth of the unit of the lower limit of the range, unless the context clearly dictates otherwise.

As used herein, ranges and amounts can be expressed as "about" a particular value or range. About also includes the exact amount. For example, "about 5%" means "about 5%" and also "5%." The term "about" can also refer to ± 10% of a given value or range of values. Therefore, about 5% also means 4.5% - 5.5%, for example. In general, the values disclosed herein, such as quantities of materials and/or ingredients, ranges, overall discussion of chemical reactions should be understood to be "about." The term "approximate" should be treated as having the same meaning as "about," unless otherwise indicated.

As used herein, the terms "or" and "and/or" are utilized to describe multiple components in combination or exclusive of one another. For example, "x, y, and/or z" can refer to "x" alone, "y" alone, "z" alone, "x, y, and z," "(x and y) or z," "x or (y and z)," or "x or y or z."

### OVERVIEW

The present disclosure introduces novel compositions and methods for controlling odors emitted from asphalt. In some embodiments, the compositions and methods disclosed herein lessen an individual's perception of an odor causing agent emitted from asphalt. In other embodiments, the compositions and methods disclosed herein reduce emissions of odor causing agents from asphalt. In this way, the present disclosure introduces a multimodal approach for combatting the problem of asphalt odor. While primarily discussing treatment of asphalt, it is further envisioned that the present disclosure can similarly combat the problem of offensive odors from other petroleum-based products and bituminous materials as described below.

The present disclosure also introduces novel methods that employ an unexpected combination of chemicals to effectively control odors in various asphalts derived from different crude sources as well as in asphalts that have been modified with different additives to help with performance. In some embodiments, the methods and compositions disclosed herein combine plant products and oils to control odors and reduce emissions of odor causing agents from asphalt.

In some embodiments, the present disclosure concerns a new discovery that when various parts, products, and/or derivatives of coffee plants (e.g., essential oils, ground coffee, etc.) are added to Hot Mixed Asphalt, both the perception of odor causing agents from the asphalt is greatly reduced and the emission of odor causing agents from the asphalt is decreased.

In other embodiments, the present disclosure is based on the new discovery that when various parts, products, and/or derivatives of coffee plants in combination with various parts, products, and/or derivatives of vanilla plants are added to Hot Mixed Asphalt, both the perception of odor causing agents from the asphalt is greatly reduced and the emission of odor causing agents from the asphalt produced is decreased.

As used herein, the terms "coffee plant part," "coffee plant product," "coffee plant derivative," "coffee plant component," and "coffee component" can be used interchangeably and each refer to all forms of coffee plants or parts or derivatives or components of a coffee plant. For example, coffee components include natural coffee plants, whole coffee plants, whole coffee beans, ground coffee beans, used coffee beans (e.g., previously brewed (used) coffee grounds of any form), brewed coffee, oils, coffee extracts or any other form or processed part of a coffee plant. Coffee components also include synthetic coffee oils or synthetic components thereof. Further, a coffee component includes any substance or class of chemicals that makes up coffee, such as coffee-derived volatile organic compounds (VOCs), terpenes, aldehydes, ketones, fatty acids, and other chemicals. Specific examples of coffee components that can be used herein include, without limitation, furaneol and damascene beta.

As used herein, the terms "vanilla plant part," "vanilla plant product," "vanilla plant derivative," "vanilla plant component," and "vanilla component" refer to all forms of vanilla plants or parts or derivatives or components of a vanilla plant. For example, vanilla components include natural vanilla plants, whole vanilla plants, vanilla beans, vanilla seeds, vanilla extracts, and any other form or processed part of a vanilla plant. Vanilla components also include synthetic vanilla products, such as synthetic vanilla oils or synthetic components thereof. Further, a vanilla component includes any substance or class of chemicals that makes up vanilla, such as vanilla-derived phenolic aldehydes, phenols, phenolic ethers, ketones, phenolic acids, aldehydes, and other chemicals. One specific example of vanilla component that can be used herein includes, without limitation, vanillin.

As used herein, coffee components and vanilla components can be referred to as "actives," by which is meant that either or both component types cause effective odor reduction and/or reduction of emission of odor agents from petroleum-based products, such as asphalt.

**In** some embodiments, contemplated compositions of the present disclosure can include one or more coffee components. In other embodiments, contemplated compositions of the present disclosure can include one or more coffee components and one or more vanilla components.

As used herein, the term an "effective amount" refers to the minimum amount of a substance (e.g., an active or a carrier) needed to achieve an intended effect. For example, an effective amount of a coffee component for improving an odor profile of asphalt refers to the minimum amount of the coffee component required to improve the odor profile of the asphalt. A skilled person will understand that an effective amount of a substance can vary according to context and/or intended effect. For example, an effective amount of a coffee component required to improve the odor profile of asphalt will vary according to the amount of asphalt being treated, the source and/or grade of the asphalt being treated, the temperature used for asphalt preparation, and/or the desired degree of improvement of odor profile for the asphalt being treated, etc. A skilled person is readily able to determine an effective amount of a given substance for a given context to achieve an intended effect.

Additional components of contemplated compositions can include carriers and other additives. Contemplated carriers include carrier oils. Examples of contemplated carrier oils include, but are not limited to, mineral oil, a vegetable oil, a fatty acid alkyl ester, or mixtures of these. Contemplated vegetable oils include sweet almond oil, apricot kernel oil, argan oil, coconut oil, olive oil, avocado oil, sunflower oil, grapeseed oil, sesame oil, jojoba oil, hemp seed oil, and/or safflower oil, etc.

Contemplated fatty acid alkyl esters include both fatty acid methyl esters and fatty acid ethyl esters. Examples of fatty acid alkyl esters that can be used herein include, without limitation, methyl and ethyl esters of palm, soy, coconut, canola, peanut, sunflower, and safflower oil, etc. A specific example of a contemplated carrier is soy methyl ester.

Additional carriers contemplated herein include anionic, cationic, or nonionic emulsifiers that can be mixed with asphalt and/or that can be used to make asphalt emulsions. Other carriers include clays and/or powders that can be used to mix vanilla and/or coffee component into asphalt. Examples of clays useful herein include, without limitation, bentonite, kaolin, silica, etc. Examples of powders that can be used herein include diatomaceous earth, ethylene-vinyl acetate, etc. Additional carriers contemplated herein include aggregates to be mixed with liquid asphalt. Such aggregates can include crushed stone, sand, and/or gravel. Further carriers contemplated herein include asphalt millings (i.e., recycled asphalt). Any combination of carriers can be included in the odor reducing compositions of the present disclosure.

Contemplated additives include scavenger compounds (e.g., metal salts) and/or other plant essential oils, natural or synthetic glycerin, silicones, waxes, etc., and combinations thereof.

In some embodiments, odor reducing compositions contemplated herein can be combined with asphalt during the process of asphalt preparation, such as during preparation of Hot Mixed Asphalt.

In other embodiments, contemplated formulations can be added to liquid asphalt at a refinery, during transfer, and/or when mixing the liquid asphalt with aggregates (e.g., crushed stone, sand, gravel, and/or asphalt millings). In some embodiments, contemplated formulations can be added directly to the aggregates prior to combination with the liquid asphalt.

In some embodiments, it is envisioned that contemplated formulations can be sprayed directly onto hot or liquid asphalt (e.g., on a newly paved road or during the process of paving). In other embodiments, it is envisioned that the contemplated formulations can be applied to previously paved asphalt surfaces to improve the odor profile of odor causing agents emitted from the asphalt and/or reduce the emission of odor causing agents from the asphalt when it is heated in the sun.

In some embodiments, it is envisioned the that contemplated formulations can be added to other petroleum-based products, as well, to improve their odor profiles and/or reduce emissions of odor causing agents from the products. Any petroleum-based product that has an offensive odor profile and/or emits odor causing agents can be treated with the odor reducing compositions disclosed herein. For example, other petroleum-based products that can be treated (or combined) with the contemplated formulations of the present disclosure include, without limitation, roofing tar, roofing materials (e.g., shingles or sealants), petroleum-based products sprayed on roads/driveways/parking lots (e.g., asphalt emulsion sealers), and petroleum-based cleaners and solvents.

In addition, the contemplated formulations can be added to other bituminous materials aside from asphalt, such as, for example, coal tar-containing or coal tar-derived products to improve their odor profiles and/or reduce emissions of odor causing agents from such products.

In another embodiment, a contemplated formulation of the present disclosure may be seen in Table 1A.

**Table 1A: Contemplated formulation**

| **Ingredient** | **Approximate Wt %** |
|---|---|
| Coffee component | 0.1-30 |
| Vanilla component | 0.1-30 |
| Carrier | 40-99.8 |

In another embodiment, a contemplated formulation of the present disclosure may be seen in Table 1B.

**Table 1B: Contemplated formulation**

| **Ingredient** | **Approximate Wt %** |
|---|---|
| Coffee component | 0.1-30 |
| Vanilla component | 0.1-30 |
| Carrier | 0-99.8 |
| Additive | 0-99.8 |

In another embodiment, a contemplated formulation of the present disclosure may be seen in Table 1C.

**Table 1C: Contemplated formulation**

| **Ingredient** | **Approximate Wt %** |
|---|---|
| Coffee essential oil | 3.75 |
| Vanilla essential oil | 1.25 |
| Carrier | 95 |

In another embodiment, a contemplated formulation of the present disclosure may be seen in Table 1D.

**Table 1D: Contemplated formulation**

| **Ingredient** | **Approximate Wt %** |
|---|---|
| Coffee essential oil | 3.75 |
| Vanilla essential oil | 1.25 |
| Soy Methyl Ester | 95 |

In another embodiment, a contemplated formulation of the present disclosure may be seen in Table 1E.

**Table 1E: Contemplated formulation**

| **Ingredient** | **Approximate Wt %** |
|---|---|
| Asphalt | 95 |
| Coffee essential oil | 0.19 |
| Vanilla essential oil | 0.06 |
| Soy Methyl Ester | 4.75 |

In another embodiment, a contemplated formulation of the present disclosure may be seen in Table 1F.

**Table 1F: Contemplated formulation**

| **Ingredient** | **Approximate Wt %** |
|---|---|
| Asphalt | 99.990000 |
| Coffee essential oil | 0.000375 |
| Vanilla essential oil | 0.000125 |
| Soy Methyl Ester | 0.009500 |

In some embodiments, the contemplated formulations of Table 1E and Table 1F can include other petroleum-based products or bituminous materials, as disclosed elsewhere herein in place of asphalt.

The Examples that follow are further illustrations of specific embodiments of the disclosure, and various uses thereof. They are set forth for explanatory purposes only and should not be construed as limiting the scope of the disclosure in any way.

### EXAMPLES

### Example 1: Testing Compositions for Odor Reduction in Asphalt

### Summary

Herein below, odor reducing compositions were identified and tested for effectiveness for odor reduction in asphalt.

### Materials and Methods

Odor reducing compositions were made of various ratios of coffee essential oils to vanilla essential oils and diluted with a carrier oil, as described below. Carrier oils tested included soy methyl ester, canola methyl ester, apricot kernel oil, grapeseed oil, and coconut methyl ester. For the experiments discussed below, soy methyl ester was used. However, the oils can be used interchangeably. The oils were measured out using an analytical scale and mixed at the different ratios tested with soy methyl ester as a carrier oil and vortexed for 1 minute before testing. Ratios of actives (coffee essential oils and vanilla essential oils) tested are shown in Table 5. Fifty grams of sample were made for each experiment for the indicated ratios. The carrier oil was included in the different odor reducing compositions for the following reasons. First, odor reducing actives (like coffee and/or vanilla components) may only require a small amount to be effective, which can lead to problems with delivering the small doses needed in the final application. By diluting these actives with a carrier oil, it can be easier to dose an appropriate amount for a particular application. In addition, carrier oils ease the dissolution of the coffee and vanilla components into the bulk of the asphalt.

Testing was conducted to determine the effects of different amounts of carrier oil with pre-determined ratios of coffee and vanilla components. Asphalt samples were treated with concentrations of carrier oils varying from 1% to 99%. This testing assisted in identifying odor reducing compositions that can be incorporated more easily into asphalt and that provide better odor and emission control.

In the testing for this method, asphalt was heated at temperatures ranging from 140°C to 200°C. However, the 190°C to 200°C range was focused on because it produces a higher intensity of odor as well as higher concentration of emissions. The parameters used represent the worst-case scenario for asphalt plants, as odor reductions seen at 190°C to 200°C will only improve at lower temperatures.

Hedonic tone, odor intensity, and Sensidyne^{®} gas tube analyses were used to determine the level of odor control and emissions control provided by the different odor reducing compositions tested in different asphalts, which varied by source and performance grade (see Table 2).

**Table 2: Manufacturers or suppliers with different grades of asphalt used in this study.**

| **Manufacturer or Supplier** | **Identifier** | **Performance Grade (PG)** |
|---|---|---|
| BP Products North America, Inc. | BP (0000002913) | 58-28 |
| BP Products North America, Inc. | BP (0000002913) | 58-28V |
| BP Products North America, Inc. | BP (0000002913) | 58-28H |
| Irving | IRV (Asphalt PG 58-28) | 58-28 |
| Michigan Paving & Materials Company | MP (Asphalt Binder) | 70-28P |
| Associated Asphalt Partners, LLC | AA (PGAB) | 58-28 |
| Associated Asphalt Partners, LLC | AA (PGAB) | 64-22 |
| Gorman Asphalt Cement | GAC (1) | 64-22S |
| Paulsboro | PB (PB224006-00) | 64S-22 |
| World Oil Corporation | WO (Asphalt PG 70-10) | 70-10 |
| Associated Asphalt Partners, LLC | AA (PGAB) | 76-22 |
| Michigan Paving and Materials Company | MP (Asphalt Binder) | 58-28 |
| Michigan Paving and Materials Company | MP (Asphalt Binder) | 64-22 |
| Michigan Paving and Materials Company | MP (Asphalt Binder) | 76-22 |
| All States Construction, Inc. & Subsidiaries | AS (Asphalt Binder) | 64-22 |
| All States Construction, Inc. & Subsidiaries | AS (Asphalt Binder) | 64-28 |
| Russell Standard | RS ( Petroleum Asphalt) | 64-22 |
| Bitumar USA, Inc. | BU (PG 64S-22) | 64S-22 |

Different forms of materials (solids and liquids) were used in formulating the different odor reducing compositions in this study. Testing was conducted on whole coffee beans, ground coffee, used ground coffee, coffee essential oil, and diluted coffee essential oil. In addition, after testing these, they were each combined with either vanilla bean or vanilla essential oil.

Odor was measured using hedonic tone and odor intensity. Hedonic tone (or HT) is the measurement of pleasantness to unpleasantness of an odor *(see* McGinley *et al.,* Measuring Composting Odors for Decision Making, U.S. Composting Council 2005 Annual Conference San Antonio, TX: 24-26 January 2005). The common 21-point scale was used for ranking odor HT. For this scale, +10 is "most pleasant", 0 is "neutral", and -10 is "most unpleasant." Hedonic tone is subjective to each assessor. The assessor must use their own personal experiences and memories of odors as the reference scale. This is established during odor assessment training. In the reported data, a change in hedonic tone is calculated by the final (treated) value minus the control value. If the value is positive, that is a change towards pleasant while a negative change moves towards unpleasantness.

Odor intensity is the perceived strength of an odor above a recognition threshold. The intensity of odors is described in ASTM E544. In general, a 10-point scale was used in relation to standard butanol solutions. For odor intensity, each assessor compares the odor intensity of a sample to the reference odorant of n-butanol. Table 3 shows the reference for odor threshold and how assessors rated samples.

**Table 3: Odor intensity information used for assessors.**

| **Odor Intensity Scale** | **Odor Intensity Description** |
|---|---|
| 1 | No odor |
| 2 | Just perceptible |
| 3 | Very slight |
| 4 | Slight |
| 5 | Slight to moderate |
| 6 | Moderate |
| 7 | Slightly strong |
| 8 | Strong |
| 9 | Moderately strong |
| 10 | Extremely strong |

A change in odor intensity was calculated by taking the final (treated) value minus the control value. A positive value means an increase in intensity while a negative value means a decrease in odor intensity. For all tests, the assessors recorded both hedonic tone and odor intensity to describe the odors of controls and treated samples. All odor testing was done with a minimum of 7 people.

Emissions from asphalt samples were measured using a Sensidyne^{®} Gas Detector Tube System with a Sensidyne^{®} AP-20S Gas Detector Tube Pump (Sensidyne, LP, St. Petersburg, FL). The pump is used to pull either 50 mL or 100 mL of sample into a gas detection tube and has a flow-finished indicator to confirm sample completion. Four different gas detection tubes were used on each sample as shown in Table 4. These gas detection tubes are colorimetric, meaning they change color when the substance or substances are detected. The tubes have a guide for temperature use as well as temperature correction supplied by the manufacturer. For sampling asphalt, the head space above the heated asphalt was used to pull the samples and confirm the temperature was in the range of each tube.

**Table 4: Sensidyne^{®} Gas Detection Tube Information**

| **Gas/Gases Detected** | **Item Number** | **Range (ppm)** | **Starting Color** | **Detection Color** |
|---|---|---|---|---|
| General Hydrocarbons | 187S | 50-1400 | Orange | Yellowish Green |
| Mercaptans | 130U | 0.1-10.0 | Pale Yellow | Pink |
| Styrene | 158S | 2.5-300 | White | Yellow |
| Hydrogen Sulfide | 120SE | 0.5-40 | Yellow | Pink |

General hydrocarbons, mercaptans, styrene, and hydrogen sulfide were measured using the gas detection tubes. The general hydrocarbon tube detects iso-butane, pentane, n-hexane, heptane, octane, cyclohexane, kerosene, and mineral turpentine. It does not differentiate between these compounds, and the final value could be one or more of these substances at the tested concentration. It is assumed from this testing that a reduction of general hydrocarbons means that any of these compounds decrease in concentration.

Mercaptan gas detection tubes measure the concentration of various mercaptans including methyl mercaptan, ethyl mercaptan, n-propyl mercaptan, isopropyl mercaptan, and tert-butyl mercaptan. Like the general hydrocarbon tubes, the mercaptan tubes do not differentiate between the different mercaptans or the individual substances concentration. Hydrogen sulfide gas tubes determine the concentration of hydrogen sulfide (H₂S) in the sample. Finally, the styrene gas detection tubes are used to determine the concentration of styrene in each sample.

Each experiment consisted of treated samples and a control sample. The control sample used was the same asphalt that was used with the treated sample held at the same conditions and temperature, without treatment added. Every sample, treated and control, used for the experiment was approximately 100 grams.

Testing with solid materials (coffee beans, coffee grounds, used coffee grounds, and vanilla beans) was done at an addition rate (amount added) of 0.1% up to 5% in this testing. The liquid materials (coffee essential oil, vanilla essential oil, and diluted versions of both) were tested at levels from 0.01% up to 10% addition. Higher amounts were not used as these may affect the physical properties of the treated asphalt. In addition, experiments were conducted to determine the ratio of coffee to vanilla that is the most effective in removing odors and reducing emissions. This testing was conducted on all forms of coffee and vanilla.

### Results and Discussion

During laboratory testing, it was found that while coffee alone significantly improved the odor and emission of asphalt, adding vanilla to the coffee boosted its performance (*see* Table 5). It was ultimately found that a ratio of 75% coffee to 25% vanilla was optimal for both odor control and emissions control. Coffee alone improved the hedonic tone of the asphalt by 4.5 points (the control asphalt had a hedonic tone of -3.5). Additionally, mercaptans reduction was improved by 20%, and styrene reduction was improved by 30%. The combination of coffee with vanilla enhances both odor control and emission control.

**Table 5. Determination of the most effective ratio of coffee to vanilla for reducing odors and emissions.**

| **Material Tested** | **% CEO** | **% VEO** | **Change in HT** | **Change in OI** | **% Reduction GH** | **% Reduction Mercaptans** | **% Reduction Styrene** | **% Reduction H₂S** |
|---|---|---|---|---|---|---|---|---|
| CEO | 100 | 0 | 4.5 | -0.5 | 50 | 40 | 41 | 44 |
| CEO & VEO | 25 | 75 | 4.5 | -0.5 | 50 | 30 | 71 | 33 |
| CEO & VEO | 50 | 50 | 5.5 | -1.0 | 50 | 50 | 41 | 22 |
| CEO & VEO | 75 | 25 | 7.5 | -2.0 | 50 | 60 | 71 | 44 |

| | | | | | | | | |
|---|---|---|---|---|---|---|---|---|
| CEO - coffee essential oil; VEO - vanilla essential oil; HT - Hedonic tone; OI - odor intensity; GH - general hydrocarbons. | | | | | | | | |

The testing results for the effect on carrier oil concentration are presented in Table 6. In this test, all experiments were conducted using the ratio of 75% coffee with 25% vanilla, previously determined to be the best approach for odor and emissions control. In addition, the dosing rate on these tests was done so that the same percentage of actives (coffee and vanilla) was introduced into the asphalt samples. By ensuring the actives stay the same, the effects of the concentration of carrier oil on the odor and emissions of the samples could be determined.

The pure solution of coffee/vanilla in asphalt did decrease odor which is reflected in a change in hedonic tone and a decrease in emissions of all gases tested. The addition of 25% carrier oil showed similar results in odor control, but a slight decrease in emissions control. The addition of 50% carrier oil resulted in a greater change in hedonic tone than the pure solution but similar emissions reduction. The solution of 75% carrier oil and 96% carrier oil had similar results to each other. Both formulations surprisingly improved the hedonic tone by 7.5 points compared to 4.5 points for the pure solution (from a hedonic tone of -3.5 for the control asphalt to a hedonic tone of 4.0 after treatment). In addition, the emissions control improved compared to the pure solution, which is reflected in the decrease in hydrogen sulfide. The results of this study demonstrate that carrier oil assists with mixing of the odor reducing compositions in asphalt giving the greatest decrease in odors and emissions. The ability of the carrier oil alone (without either coffee or vanilla component) to improve odor profile and/or reduce emission rates of odor causing agents from asphalt was also examined. No effect was observed with carrier oil alone on improving odor profiles or reducing emissions rates (data not shown).

**Table 6: Investigation of carrier oil percentage needed for effective odor and emissions control.**

| **Material Tested** | **Change in HT** | **Change in OI** | **% Reduction GH** | **% Reduction Mercaptans** | **% Reduction Styrene** | **% Reduction H₂S** |
|---|---|---|---|---|---|---|
| Coffee and Vanilla solution only | 4.5 | -2.0 | 50 | 60 | 71 | 44 |
| Coffee & Vanilla solution with 25 % carrier | 5.0 | -2.0 | 50 | 40 | 41 | 44 |
| Coffee & Vanilla solution with 50% carrier | 5.5 | -2.0 | 50 | 40 | 41 | 44 |
| Coffee & Vanilla solution with 75% carrier | 7.5 | -2.0 | 50 | 60 | 71 | 56 |
| Coffee & Vanilla solution with 95% carrier | 7.5 | -1.5 | 50 | 60 | 71 | 56 |

| | | | | | | |
|---|---|---|---|---|---|---|
| HT - Hedonic tone; OI - odor intensity; GH - general hydrocarbons. | | | | | | |

Next, testing was conducted on different forms of coffee and vanilla to further investigate their interaction with asphalt. Only the results of testing from two different asphalts are presented. Table 7 has data from Associated Asphalt (Roanoke, VA) with grade PG 58-28 while Table 8 has data from Paulsboro Refining Company, LL (Paulsboro, NJ) with grade PG 64S-22. The materials tested resulted in a decrease in odor and emissions. Solid materials had expected results with coffee beans having the smallest change, followed by the used ground coffee, and finally the ground coffee having the best results of these solids (without vanilla). Because a whole coffee bean has an overall smaller surface area than ground coffee, it makes sense that whole coffee did not work as well as ground coffee. The smaller surface area allows for less of the actives to interact with the odor causing molecules. In addition, used ground coffee has less actives remaining in it than ground coffee resulting in less odor and emissions control from the used ground coffee compared to the fresh ground coffee. This same pattern emerges from the solid materials with vanilla added. The coffee bean with vanilla bean is the least effective, followed by the used ground coffee with vanilla, and with the most effective being the ground coffee with vanilla.

A similar and expected pattern emerged from the samples with liquids added. The pure essential oils, either coffee alone or coffee with vanilla, had less odor and emissions control than those that are diluted with carrier oil. In addition, samples with vanilla outperformed samples without the vanilla. The samples using the liquid increased the pleasantness of the odor by as much as 9.7 points. In general, the odor intensity on these samples remains consistent. While there are some changes the intensity, it does not have a negative impact on the odor control. The emissions data varied based on the testing being done with reductions in the range of 25-50% for general hydrocarbons, 10-60% for mercaptans, 12-76% for styrene, and 17-67% for hydrogen sulfide. Overall, the liquid samples with both coffee and vanilla and diluted with carrier oil provided the best odor and emission control.

**Table 7: Odor and emission testing results using different materials with Associated Asphalt PG 58-28.**

| **Material Tested** | **Addition Rate** | **Change in HT** | **Change in OI** | **% Reduction GH** | **% Reduction Mercaptans** | **% Reduction Styrene** | **% Reduction H₂S** |
|---|---|---|---|---|---|---|---|
| Coffee Beans | 1% | 3.2 | -0.4 | 50 | 30 | 41 | 17 |
| Coffee Beans & Vanilla Beans (75%/25%) | 1% | 4.2 | -1.4 | 50 | 32 | 53 | 18 |
| Coffee grounds | 1% | 7.2 | -1.9 | 50 | 40 | 65 | 33 |
| Coffee grounds & Vanilla Beans (75%/25%) | 1% | 7.7 | -0.9 | 50 | 40 | 71 | 50 |
| Used coffee grounds | 1% | 6.2 | -2.4 | 50 | 40 | 59 | 33 |
| Used coffee grounds & Vanilla Beans (75%/25%) | 1% | 6.7 | -1.9 | 50 | 60 | 65 | 37 |
| CEO | 0.1% | 6.7 | -3.4 | 50 | 40 | 65 | 50 |
| CEO & VEO (75%/25%) | 0.1% | 8.2 | -1.9 | 50 | 50 | 71 | 67 |
| CEO & VEO (75%/25%) as 25% mixed with 75% carrier oil | 0.1% | 9.2 | -1.4 | 50 | 60 | 71 | 33 |
| CEO & VEO (75%/25%) as 5% mixed with 95% carrier oil | 0.1% | 9.7 | -1.4 | 50 | 60 | 71 | 33 |

CEO - coffee essential oil; VEO - vanilla essential oil; HT - Hedonic tone; OI - odor intensity; GH - general hydrocarbons.

**Table 8: Odor and emission testing results using different materials with Paulsboro PG 64S-22.**

| **Material Tested** | **Addition Rate** | **Change in HT** | **Change in OI** | **% Reduction GH** | **% Reduction Mercaptans** | **% Reduction Styrene** | **% Reduction H₂S** |
|---|---|---|---|---|---|---|---|
| Coffee Beans | 1% | 2.5 | -1.0 | 25 | 10 | 12 | 22 |
| Coffee Beans & Vanilla Beans (75%/25%) | 1% | 2.5 | 1.0 | 25 | 10 | 18 | 33 |
| Coffee grounds | 1% | 6.5 | -1.0 | 25 | 40 | 41 | 44 |
| Coffee grounds & Vanilla Beans (75%/25%) | 1% | 7.5 | 0.0 | 25 | 50 | 47 | 56 |
| Used coffee grounds | 1% | 3.5 | -1.0 | 25 | 30 | 29 | 33 |
| Used coffee grounds & Vanilla Beans (75%/25%) | 1% | 6.5 | -1.0 | 25 | 40 | 35 | 33 |
| CEO | 0.1% | 5.5 | -1.0 | 25 | 50 | 41 | 44 |
| CEO & VEO (75%/25%) | 0.1% | 6.5 | -1.0 | 25 | 50 | 71 | 67 |
| CEO & VEO (75%/25%) as 25% mixed with 75% carrier oil | 0.1% | 7.5 | -2.0 | 25 | 60 | 76 | 67 |
| CEO & VEO (75%/25%) as 5% mixed with 95% carrier oil | 0.1% | 8.5 | -2.0 | 25 | 60 | 76 | 67 |

| | | | | | | | |
|---|---|---|---|---|---|---|---|
| CEO - coffee essential oil; VEO - vanilla essential oil; HT - Hedonic tone; OI - odor intensity; GH - general hydrocarbons. | | | | | | | |

To demonstrate the effectiveness of the optimized coffee and vanilla with carrier oil mixture on asphalts, testing was conducted on 9 different asphalts representing different manufactures and performance grades. Table 9 presents the results of using a 5% solution of coffee/vanilla (75%/25%) with 95% carrier oil dosed at 0.1%. Testing was performed at different rates of application, but 0.1% is reported for continuity purposes. For all 9 asphalt samples, the hedonic tone improved with the result being positive for all treated samples and all assessors noting a notable positive shift in hedonic tone for the asphalts after treatment, which is represented by an average positive change in hedonic tone of 7 points. The overall odor intensity decreased by 2 points on average. Overall, the odor of these asphalts improved significantly with treatment. Emissions testing performed on these asphalts resulting in decreasing in the concentration of these gases. The average reduction was 42% for general hydrocarbons, 44% for mercaptans, 41% for styrene, and 22% for hydrogen sulfide. Based on this testing, the overall rate of emissions dropped for each asphalt. Without being restricted to any specific theory, it can be assumed that the components found in coffee and vanilla interact with the odor compounds present in asphalt leading to a reduction in emissions. Used together, these results demonstrate that the tested formulations exhibit remarkable efficacy for reducing both odors and emissions from a broad range of asphalts.

**Table 9: A formulation with 5% of Coffee/Vanilla (75%/25%) and 95% carrier oil dosed into different asphalts at 0.1%.**

| **Manufacturer or Supplier** | **Grade** | **Change in HT** | **Change in OI** | **% Reduction GH** | **% Reduction Mercaptans** | **% Reduction Styrene** | **% Reduction H₂S** |
|---|---|---|---|---|---|---|---|
| BP | 58-28 | 7.2 | -1.0 | 33 | 50 | N/A | 0 |
| BP | 58-28V | 7.2 | -2.6 | 67 | 25 | N/A | 25 |
| BP | 58-28H | 8.6 | -3.6 | 67 | 17 | N/A | 14 |
| IRV | 58-28 | 5.8 | -5.4 | 50 | 75 | 10 | 0 |
| MP | 70-28P | 6.2 | -0.4 | 50 | 33 | 20 | 33 |
| AA | 58-28 | 9.7 | -1.4 | 50 | 60 | 65 | 33 |
| AA | 64-22 | 8.4 | -3.2 | 0 | 33 | 20 | 33 |
| GAC | 64-22S | 6.4 | -2.8 | 33 | 40 | 60 | 0 |
| PB | 64S-22 | 7.5 | -1.5 | 25 | 60 | 71 | 56 |
| WO | 70-10 | 6.2 | -3.4 | 50 | 60 | 80 | 50 |
| AA | 76-22 | 7 | -2 | N/A | 100 | 100 | 100 |
| MP | 58-28 | 4.3 | -2.5 | N/A | 100 | 100 | 100 |
| MP | 64-22 | 6.3 | -4 | N/A | 100 | 100 | 100 |
| MP | 76-22 | 5.7 | -0.3 | N/A | 100 | N/A | N/A |
| AS | 64-22 | 6.4 | -1.7 | 100 | 50 | N/A | 75 |
| AS | 64-28 | 8.6 | -2.5 | N/A | 33 | 100 | 50 |
| RS | 64-22 | 5.8 | -2.7 | N/A | 67 | 100 | 100 |
| BU | 64S-22 | 6.7 | -2.4 | N/A | 80 | N/A | N/A |
| | | | | | | | |
| Average | N/A | 6.9 | -2.4 | 48 | 60 | 69 | 48 |

### Embodiments of the Disclosure

Embodiment 1. A composition, comprising:
a) about 0.1-30% of a coffee component;
b) about 0-30% of a vanilla component;
c) about 40-99.8% of a carrier; and
d) about 0-99.8% of an additive,
wherein the composition provides at least one of a positive change in hedonic tone and a negative change in odor intensity of a petroleum-based product or a bituminous material when added thereto.

Embodiment 2. The composition of embodiment 1, wherein the composition comprises:
a) about 0.1-30% of a coffee component;
b) about 0.1-30% of a vanilla component; and
c) about 40-99.8% of a carrier.

Embodiment 3. The composition of embodiment 1, wherein the composition comprises:
a) about 3.75% of a coffee component;
b) about 1.25% of a vanilla component; and
c) about 95% of a carrier.

Embodiment 4. The composition of any one of embodiments 1-3, wherein the coffee component comprises whole coffee beans, ground coffee beans, used coffee grounds, brewed coffee, oils, a coffee extract, a synthetic coffee product, coffee-derived volatile organic compounds (VOCs), terpenes, aldehydes, ketones, fatty acids, furaneol, or damascene beta, and combinations thereof.

Embodiment 5. The composition of any one of embodiments 1-4, wherein the vanilla component comprises whole vanilla beans, vanilla seeds, a vanilla extract, a synthetic vanilla product, vanilla-derived phenolic aldehydes, phenols, phenolic ethers, ketones, phenolic acids, aldehydes, or vanillin, and combinations thereof.

Embodiment 6. The composition of any one of embodiments 1-5, wherein the carrier comprises a carrier oil, an anionic emulsifier, a cationic emulsifier, a nonionic emulsifier, a clay, a powder, or an aggregate, and combinations thereof.

Embodiment 7. The composition of embodiment 6, wherein the carrier oil comprises mineral oil, a vegetable oil, or a fatty acid alkyl ester, and combinations thereof.

Embodiment 8. The composition of embodiment 7, wherein the vegetable oil comprises sweet almond oil, apricot kernel oil, argan oil, coconut oil, olive oil, avocado oil, sunflower oil, grapeseed oil, sesame oil, jojoba oil, hemp seed oil, or safflower oil, and combinations thereof.

Embodiment 9. The composition of embodiment 7, wherein the fatty acid alkyl ester comprises a fatty acid methyl ester or a fatty acid ethyl ester, and combinations thereof.

Embodiment 10. The composition of embodiment 9, wherein the fatty acid methyl ester comprises a methyl ester of palm oil, soy oil, coconut oil, canola oil, peanut oil, sunflower oil, or safflower oil, and combinations thereof.

Embodiment 11. The composition of embodiment 10, wherein the fatty acid methyl ester is soy methyl ester.

Embodiment 12. The composition of embodiment 9, wherein the fatty acid ethyl ester comprises an ethyl ester of palm oil, soy oil, coconut oil, canola oil, peanut oil, sunflower oil, or safflower oil, and combinations thereof.

Embodiment 13. The composition of embodiment 6, wherein the clay comprises bentonite, kaolin, or silica, and combinations thereof.

Embodiment 14. The composition of embodiment 6, wherein the powder comprises diatomaceous earth or ethylene-vinyl acetate and combinations thereof.

Embodiment 15. The composition of embodiment 6, wherein the aggregate comprises crushed stone, sand, gravel, or asphalt millings, and combinations thereof.

Embodiment 16. The composition of any one of embodiments 1-15, wherein the additive comprises a scavenger compound, a plant essential oil, a natural glycerin, a synthetic glycerin, a silicone, or a wax, and combinations thereof.

Embodiment 17. The composition of any one of embodiments 1-16, wherein the composition reduces emissions of at least one of general hydrocarbons, mercaptans, and hydrogen sulfide from a petroleum-based product or a bituminous material when added thereto.

Embodiment 18. The composition of any one of embodiments 1-17, wherein the petroleum-based product comprises asphalt, roofing tar, a petroleum-based roofing material, an asphalt emulsion sealer, a petroleum-based cleaner, or a petroleum-based solvent, and combinations thereof.

Embodiment 19. The composition of embodiment 18, wherein the petroleum-based product is asphalt.

Embodiment 20. The composition of any one of embodiments 1-17, wherein the bituminous material comprises a coal-tar containing product.

Embodiment 21. A composition, comprising:
a) about 3.75% of coffee essential oil;
b) about 1.25% of vanilla essential oil; and
c) about 95% of soy methyl ester.

Embodiment 22. A composition, comprising:
a) about 95% to about 99.99% of a petroleum-based product or a bituminous material;
b) about 0.000375% to about 0.19% of coffee essential oil;
b) about 0.000125% to about 0.06% of vanilla essential oil; and
c) about 0.0095% to about 4.75% of soy methyl ester.

Embodiment 23. The composition of embodiment 22, wherein the composition comprises:
a) about 95% of the petroleum-based product or the bituminous material;
b) about 0.19% of coffee essential oil;
b) about 0.06% of vanilla essential oil; and
c) about 4.75% of soy methyl ester.

Embodiment 24. The composition of embodiment 22, wherein the composition comprises:
a) about 99.99% of the petroleum-based product or the bituminous material;
b) about 0.000375% of coffee essential oil;
c) about 0.000125% of vanilla essential oil; and
d) about 0.0095% of soy methyl ester.

Embodiment 25. The composition of any one of embodiments 22-24, wherein the petroleum-based product comprises asphalt, roofing tar, a petroleum-based roofing material, an asphalt emulsion sealer, a petroleum-based cleaner, or a petroleum-based solvent, and combinations thereof.

Embodiment 25. The composition of embodiment 24, wherein the petroleum-based product is asphalt.

Embodiment 26. The composition of any one of embodiments 21-23, wherein the bituminous material comprises a coal-tar containing product.

Embodiment 27. A composition, comprising:
a) a petroleum-based product or a bituminous material; and
b) an effective amount of an odor reducing composition, the composition comprising
   i) a coffee component,
   ii) a vanilla component, and
   iii) a carrier,

wherein the coffee component and the vanilla component are present in a 3 to 1 ratio,
wherein the odor reducing composition provides at least one of a positive change in hedonic tone and a negative change in odor intensity to the petroleum-based product or the bituminous material compared to the petroleum-based product or the bituminous material alone.

Embodiment 28. The composition of embodiment 27, wherein the odor reducing composition reduces emissions of at least one of general hydrocarbons, mercaptans, and hydrogen sulfide from the petroleum-based product or the bituminous material.

Embodiment 29. A method, comprising:
combining an effective amount of a coffee component, an effective amount of a vanilla component, a carrier, and optionally, an additive, to form an odor reducing composition,
wherein the odor reducing composition provides at least one of a positive change in hedonic tone and a negative change in odor intensity of a petroleum-based product or a bituminous material when added thereto.

Embodiment 30. A method, comprising:
providing an odor reducing composition comprising i) an effective amount of a coffee component, ii) an effective amount of a vanilla component, iii) a carrier, and iv) optionally, an additive,
wherein the odor reducing composition provides at least one of a positive change in hedonic tone and a negative change in odor intensity of a petroleum-based product or a bituminous material when added thereto.

Embodiment 31. A method of reducing odor in a petroleum-based product or a bituminous material, comprising:
a) combining a petroleum-based product or a bituminous material with an effective amount of an odor reducing composition comprising
   i) a coffee component,
   ii) a vanilla component,
   iii) optionally, a carrier, and
   iv) optionally, an additive; and
b) at least one of increasing hedonic tone and decreasing odor intensity of the petroleum-based product or the bituminous material compared to the petroleum-based product or the bituminous material alone.

Embodiment 32. The method of any one of embodiments 29-31, wherein the coffee component comprises whole coffee beans, ground coffee beans, used coffee grounds, brewed coffee, oils, a coffee extract, a synthetic coffee product, coffee-derived volatile organic compounds (VOCs), terpenes, aldehydes, ketones, fatty acids, furaneol, or damascene beta, and combinations thereof.

Embodiment 33. The method of any one of embodiments 29-32, wherein the vanilla component comprises whole vanilla beans, vanilla seeds, a vanilla extract, a synthetic vanilla product, vanilla-derived phenolic aldehydes, phenols, phenolic ethers, ketones, phenolic acids, aldehydes, or vanillin, and combinations thereof.

Embodiment 33. The method of any one of embodiments 29-33, wherein the carrier comprises a carrier oil, an anionic emulsifier, a cationic emulsifier, a nonionic emulsifier, a clay, a powder, or an aggregate, and combinations thereof.

Embodiment 34. The method of embodiment 33, wherein the carrier oil comprises mineral oil, a vegetable oil, or a fatty acid alkyl ester, and combinations thereof.

Embodiment 35. The method of embodiment 34, wherein the vegetable oil comprises sweet almond oil, apricot kernel oil, argan oil, coconut oil, olive oil, avocado oil, sunflower oil, grapeseed oil, sesame oil, jojoba oil, hemp seed oil, or safflower oil, and combinations thereof.

Embodiment 36. The method of embodiment 34, wherein the fatty acid alkyl ester comprises a fatty acid methyl ester or a fatty acid ethyl ester, and combinations thereof.

Embodiment 37. The method of embodiment 36, wherein the fatty acid methyl ester comprises a methyl ester of palm oil, soy oil, coconut oil, canola oil, peanut oil, sunflower oil, or safflower oil, and combinations thereof.

Embodiment 38. The method of embodiment 37, wherein the fatty acid methyl ester is soy methyl ester.

Embodiment 39. The method of embodiment 36, wherein the fatty acid ethyl ester comprises an ethyl ester of palm oil, soy oil, coconut oil, canola oil, peanut oil, sunflower oil, or safflower oil, and combinations thereof.

Embodiment 40. The method of embodiment 33, wherein the clay comprises bentonite, kaolin, or silica, and combinations thereof.

Embodiment 41. The method of embodiment 33, wherein the powder comprises diatomaceous earth or ethylene-vinyl acetate and combinations thereof.

Embodiment 42. The method of embodiment 33, wherein the aggregate comprises crushed stone, sand, gravel, or asphalt millings, and combinations thereof.

Embodiment 43. The method of any one of embodiments 29-42, wherein the additive comprises a scavenger compound, a plant essential oil, a natural glycerin, a synthetic glycerin, a silicone, or a wax, and combinations thereof.

Embodiment 44. The method of any one of embodiments 29-43, wherein the petroleum-based product comprises asphalt, roofing tar, a petroleum-based roofing material, an asphalt emulsion sealer, a petroleum-based cleaner, or a petroleum-based solvent, and combinations thereof.

Embodiment 45. The method of embodiment 44, wherein the petroleum-based product is asphalt.

Embodiment 46. The method of any one of embodiments 29-43, wherein the bituminous material comprises a coal-tar containing product.

Embodiment 47. The method of embodiment 29 or 30, wherein the odor reducing composition reduces emissions of at least one of general hydrocarbons, mercaptans, and hydrogen sulfide from a petroleum-based product or a bituminous material when added thereto.

Embodiment 48. The method of embodiment 31 further comprising:
c) reducing emissions of at least one of general hydrocarbons, mercaptans, and hydrogen sulfide from the petroleum-based product or the bituminous material.

The embodiments illustratively described herein suitably can be practiced in the absence of any element or elements, limitation or limitations that are not specifically disclosed herein. The terms and expressions which have been employed are used as terms of description and not of limitation, and there is no intention that in the use of such terms and expressions of excluding any equivalents of the features shown and described or portions thereof, but it is recognized that various modifications are possible within the scope of the embodiments claimed. Thus, it should be understood that although the present description has been specifically disclosed by embodiments, optional features, modification, and variation of the concepts herein disclosed may be resorted to by those skilled in the art, and that such modifications and variations are considered to be within the scope of these embodiments as defined by the description and the appended claims. Although some aspects of the present disclosure can be identified herein as particularly advantageous, it is contemplated that the present disclosure is not limited to these particular aspects of the disclosure.

Claims or descriptions that include "or" between one or more members of a group are considered satisfied if one, more than one, or all of the group members are present in, employed in, or otherwise relevant to a given product or process unless indicated to the contrary or otherwise evident from the context. The disclosure includes embodiments in which exactly one member of the group is present in, employed in, or otherwise relevant to a given product or process. The disclosure includes embodiments in which more than one, or all of the group members are present in, employed in, or otherwise relevant to a given product or process.

Furthermore, the disclosure encompasses all variations, combinations, and permutations in which one or more limitations, elements, clauses, and descriptive terms from one or more of the listed claims is introduced into another claim. For example, any claim that is dependent on another claim can be modified to include one or more limitations found in any other claim that is dependent on the same base claim. Where elements are presented as lists, e.g., in Markush group format, each subgroup of the elements is also disclosed, and any element(s) can be removed from the group.

It should it be understood that, in general, where the disclosure, or aspects of the disclosure, is/are referred to as comprising particular elements and/or features, certain embodiments of the disclosure or aspects of the disclosure consist, or consist essentially of, such elements and/or features. For purposes of simplicity, those embodiments have not been specifically set forth herein.

## Claims

1. A composition, comprising:
a) about 0.1-30% of a coffee component;
b) about 0-30% of a vanilla component;
c) about 40-99.8% of a carrier; and
d) about 0-99.8% of an additive,
wherein the composition provides at least one of a positive change in hedonic tone and a negative change in odor intensity of a petroleum-based product or a bituminous material when added thereto.

2. The composition of claim 1, wherein the composition comprises:
a) about 0.1-30% of a coffee component;
b) about 0.1-30% of a vanilla component; and
c) about 40-99.8% of a carrier; or
a) about 3.75% of a coffee component;
b) about 1.25% of a vanilla component; and
c) about 95% of a carrier.

3. The composition of claim 1 or claim 2, wherein
the coffee component comprises whole coffee beans, ground coffee beans, used coffee grounds, brewed coffee, oils, a coffee extract, a synthetic coffee product, coffee-derived volatile organic compounds (VOCs), terpenes, aldehydes, ketones, fatty acids, furaneol, or damascene beta, and combinations thereof;
the vanilla component comprises whole vanilla beans, vanilla seeds, a vanilla extract, a synthetic vanilla product, vanilla-derived phenolic aldehydes, phenols, phenolic ethers, ketones, phenolic acids, aldehydes, or vanillin, and combinations thereof;
the carrier comprises a carrier oil, an anionic emulsifier, a cationic emulsifier, a nonionic emulsifier, a clay, a powder, or an aggregate, and combinations thereof;
the petroleum-based product comprises asphalt, roofing tar, a petroleum-based roofing material, an asphalt emulsion sealer, a petroleum-based cleaner, or a petroleum-based solvent, and combinations thereof; and
the bituminous material comprises a coal-tar containing product.

4. The composition of claim 3, wherein the carrier oil comprises mineral oil, a vegetable oil, or a fatty acid alkyl ester, and combinations thereof.

5. The composition of claim 4, wherein
the vegetable oil comprises sweet almond oil, apricot kernel oil, argan oil, coconut oil, olive oil, avocado oil, sunflower oil, grapeseed oil, sesame oil, jojoba oil, hemp seed oil, or safflower oil, and combinations thereof;
the fatty acid alkyl ester comprises a fatty acid methyl ester or a fatty acid ethyl ester, and combinations thereof;
the fatty acid methyl ester comprises a methyl ester of palm oil, soy oil, coconut oil, canola oil, peanut oil, sunflower oil, or safflower oil, and combinations thereof; and
the fatty acid ethyl ester comprises an ethyl ester of palm oil, soy oil, coconut oil, canola oil, peanut oil, sunflower oil, or safflower oil, and combinations thereof.

6. The composition of any one of claims 3-5, wherein
the clay comprises bentonite, kaolin, or silica, and combinations thereof;
the powder comprises diatomaceous earth or ethylene-vinyl acetate and combinations thereof;
the aggregate comprises crushed stone, sand, gravel, or asphalt millings, and combinations thereof; and
the additive comprises a scavenger compound, a plant essential oil, a natural glycerin, a synthetic glycerin, a silicone, or a wax, and combinations thereof.

7. The composition of any one of claims 1-6, wherein the carrier comprises soy methyl ester.

8. A composition, comprising:
a) a petroleum-based product or a bituminous material; and
b) an effective amount of an odor reducing composition, the composition comprising
i) a coffee component,
ii) a vanilla component, and
iii) a carrier,
wherein the coffee component and the vanilla component are present in a 3 to 1 ratio,
wherein the odor reducing composition provides at least one of a positive change in hedonic tone and a negative change in odor intensity to the petroleum-based product or the bituminous material compared to the petroleum-based product or the bituminous material alone.

9. The composition of claim 8, comprising:
a) about 95% to about 99.99% of a petroleum-based product or a bituminous material;
b) about 0.000375% to about 0.19% of coffee essential oil;
c) about 0.000125% to about 0.06% of vanilla essential oil; and
d) about 0.0095% to about 4.75% of soy methyl ester; or
a) about 95% of the petroleum-based product or the bituminous material;
b) about 0.19% of coffee essential oil;
c) about 0.06% of vanilla essential oil; and
d) about 4.75% of soy methyl ester; or
a) about 99.99% of the petroleum-based product or the bituminous material;
b) about 0.000375% of coffee essential oil;
c) about 0.000125% of vanilla essential oil; and
d) about 0.0095% of soy methyl ester.

10. The composition of claim 8 or claim 9, wherein
the petroleum-based product comprises asphalt, roofing tar, a petroleum-based roofing material, an asphalt emulsion sealer, a petroleum-based cleaner, or a petroleum-based solvent, and combinations thereof; and
the bituminous material comprises a coal-tar containing product.

11. The composition of any one of claims 1-10, wherein the composition reduces emissions of at least one of general hydrocarbons, mercaptans, and hydrogen sulfide from a petroleum-based product or a bituminous material when added thereto.

12. A method of reducing odor in a petroleum-based product or a bituminous material, comprising:
a) combining a petroleum-based product or a bituminous material with an effective amount of the composition of any one of claims 1-11;
b) at least one of increasing hedonic tone and decreasing odor intensity of the petroleum-based product or the bituminous material compared to the petroleum-based product or the bituminous material alone; and, optionally,
c) reducing emissions of at least one of general hydrocarbons, mercaptans, and hydrogen sulfide from the petroleum-based product or the bituminous material.

13. A method, comprising:
providing an odor reducing composition comprising i) an effective amount of a coffee component, ii) an effective amount of a vanilla component, iii) a carrier, and iv) optionally, an additive,
wherein the odor reducing composition provides at least one of a positive change in hedonic tone and a negative change in odor intensity of a petroleum-based product or a bituminous material when added thereto.

14. The method of claim 13, wherein the odor reducing composition is the composition of any one of claims 1-11.

15. The method of claim 13 or claim 14, wherein the odor reducing composition reduces emissions of at least one of general hydrocarbons, mercaptans, and hydrogen sulfide from a petroleum-based product or a bituminous material when added thereto.
